# EUROPEAN PATENT SPECIFICATION

(11) **EP 3 422 903 B1**
(45) Date of publication and mention of the grant of the patent: **22.11.2023**
(21) Application number: 17760392.5
(22) Date of filing: 21.02.2017
(51) Int. Cl.: F16B 12/12

(54) **WALL HANGER SYSTEM**
WANDAUFHÄNGERSYSTEM
SYSTÈME DE SUSPENSION MURALE

(30) Priority: 02.03.2016 SE 1650276
(43) Date of publication of application: 09.01.2019
(73) Proprietor: IKEA Supply AG, 4133 Pratteln (CH)
(72) Inventor: ROBÉRT, Ola, Shanghai 200235 (CN); LI, Ben, Shanghai 200235 (CN)
(74) Representative: Ström & Gulliksson AB
(86) International application number: PCT/SE2017/050163
(87) International publication number: WO 2017/151036

(56) References cited:
- EP-A1- 3 037 612
- WO-A1-2013/072671
- DE-A1- 4 337 927
- DE-A1- 4 434 018
- GB-A- 2 121 099
- GB-A- 2 496 613
- US-A- 4 473 316
- US-A1- 2004 056 167

## Description

### Field of the invention

The present invention relates to a wall hanger system for attaching an item to be hung to a vertical wall. The invention also relates to a furniture system comprising a pair of suspension rails configured to be vertically mounted on a wall using such a wall hanger system.

### Background of the invention

Furniture components to be hung on a wall, such as shelves and cabinets, are often attached to the wall by means of a plurality of screws, which may be included in a kit together with the furniture components, or, alternatively, the screws are provided separately. For example, GB 2 496 613 A suggests a set for fixing a panel to a substrate, the set comprising a receiving member provided with a rib, and a retaining member provided with a groove, wherein the retaining member is received in the receiving member such that the rib is received in the groove.

However, during the process of attaching the furniture component to the wall, there are many possible sources of human error which may lead to an incorrect installation.

### Summary of the invention

It is an object of the present invention to solve, or at least mitigate, parts or all of the above mentioned problems by a wall hanger system constructed in accordance with claim 1. To this end, there is provided a wall hanger system for attaching an item to be hung to a vertical wall, the wall hanger system comprising a suspension washer configured to be attached to one of the wall and the item to be hung, the suspension washer comprising a mounting face configured to abut, along an abutment plane, said one of the wall and the item to be hung, and a slot engagement edge separated from, and facing, said abutment plane. The wall hanger system also comprises a slotted suspension fitting for cooperation with said suspension washer, the slotted suspension fitting being configured to be attached to the other of the wall and the item to be hung and comprising a suspension slot having a first, relatively wider, washer insertion portion configured to freely receive the slot engagement edge of the suspension washer, and a second, relatively narrower, washer engagement portion configured to engage with the slot engagement edge of the suspension washer. The wall hanger system is configured to allow inserting the slot engagement edge of the suspension washer, when the suspension washer is attached to said one of the wall and the item to be hung, into the washer insertion portion of the suspension slot, and translating the item to be hung such that the slot engagement edge of the suspension washer moves along the suspension slot to the washer engagement portion of the suspension slot, thereby confining the slot engagement edge of the suspension washer in the washer engagement portion of the suspension slot so as to lock the suspension washer to the slotted suspension fitting. The suspension washer comprises a mounting screw aperture for receiving a screw for mounting the suspension washer onto said one of the wall and the item to be hung, wherein the mounting screw aperture is an adjustment aperture shaped to allow, when screwed onto said one of the wall and the item to be hung, adjustment of the suspension washer along the abutment plane.Such slotted fittings are sometimes referred to as keyhole fittings, since the suspension slot often, but not always, has the general shape of a keyhole. Slotted fittings as such are known. By way of example, US4473316A discloses a fastening clip for assembling pieces of furniture together.

The present suspension washer allows attachment to said one of the wall and the item to be hung with its slot engagement edge located at a predetermined, well-defined distance from the abutment plane, regardless of what means of attachment may be needed for attaching the suspension washer to said one of the wall and the item to be hung. By way of example, assuming that the suspension washer is to be attached to a wall, different types of screws may be needed for good attachment to different wall materials. The suspension washer design reduces the risk of incorrect installation due to human mistake. Hanging the suspension fitting directly onto an arbitrary screw, which may be selected by a person installing the system based on the wall material and screwed into the wall to an arbitrary depth deemed suitable, gives rise to two sources of error which may jeopardize proper engagement with the slotted suspension fitting: The person may unwittingly select a screw having a screw head unsuitable for the suspension slot, and/or screw the screw into the wall to an unsuitable depth. The design of the suspension washer eliminates both those sources of error, since the suspension washer can be screwed into firm engagement with its mounting face against the wall using any type of screw, and automatically positions the slot engagement edge at the correct, predetermined distance from the wall. Moreover, the slot engagement edge has the intended shape that matches with the suspension slot. The slot engagement edge may be defined by a flat flange extending parallel to the abutment plane. As an exemplary alternative, the suspension washer may have a generally frustoconical shape tapering towards the abutment plane, wherein the slot engagement edge is defined by a line of engagement between the washer and the suspension slot edge at the washer engagement portion of the suspension slot. According to an embodiment, the suspension slot may have the general shape of a keyhole.

As defined above, the suspension washer comprises a mounting screw aperture for receiving a screw for mounting the suspension washer onto said one of the wall and the item to be hung. Optionally, one or several mounting screws adapted to fit the suspension washer may be included in the wall hanger system, or may be provided separately. According to an embodiment, the suspension washer defines a countersunk screw head space in a face opposite to said mounting face. Such a countersunk space reduces the space occupied by the wall hanger system in the space between the wall and the item to be hung. By way of example, if the suspension washer is to be mounted on a wall, a screw head protruding from the suspension washer may require unwanted milling of a space for receiving the screw head in the item to be hung, whereas this is not needed if the suspension washer comprises a countersunk screw head space adapted to receive a screw head. This increases the strength of the item to be hung.

The mounting screw aperture may comprise a mounting screw engagement edge for engaging with a head of a mounting screw, wherein a suspension distance between the slot engagement edge and the abutment plane defined by the mounting face, along a direction perpendicular to the abutment plane, is greater than a mounting distance between the mounting screw engagement edge and the abutment plane defined by the mounting face, along said direction perpendicular to the abutment plane. The vertical load of the item to be hung will result in a torque on the engagement between mounting screw and said one of the wall and the item to be hung. By having the mounting screw engagement edge closer to the mounting plane than the slot engagement edge, the mounting screw head may be located very close to the wall, which minimizes said torque. This increases the strength of the wall suspension of the item to be suspended. According to embodiments, the mounting distance is between 0.2 mm and 2 mm. The mounting distance may correspond to a material thickness of the suspension washer at location of the mounting face. The screw engagement edge may define at least a portion of the periphery of the mounting screw aperture.

According to an embodiment, the slot engagement edge may face the abutment plane to define, along a direction perpendicular to the abutment plane, a free distance between the slot engagement edge and the abutment plane. The entire free distance between the slot engagement edge and the abutment plane may thereby be available for receiving the washer engagement portion of the slotted suspension fitting, which enables the washer engagement portion to have a substantial thickness and/or to be provided with a wedge. This increases the strength of the wall suspension of the item to be suspended.

According to an embodiment, the suspension washer may be configured as a bowl of sheet material of thickness 0.2-1.5 mm. Exemplary suitable materials are e.g., sheet metal, such as steel sheet, and engineering plastic, such as polyamide or polycarbonate.

As defined above,, the mounting screw aperture is an adjustment aperture shaped to allow, when screwed onto said one of the wall and the item to be hung, adjustment of the suspension washer along the abutment plane. By way of example, the adjustment aperture may be configured as a non-circular mounting screw hole, allowing translating the mounting screw along the mounting screw hole; as a circular mounting screw hole located concentric with a circular slot engagement edge, allowing the slot engagement edge to move by rotating the suspension washer about the mounting screw; or as a mounting screw slot extending from the periphery towards the centre of the suspension washer, allowing the slot to be translated along the mounting screw. The adjustment aperture may be configured to allow horizontal as well as vertical adjustment of the suspension washer along the abutment plane. The mounting screw aperture comprises an elongate portion extending parallel to the abutment plane.

According to an embodiment, the mounting screw aperture is configured as a mounting screw hole penetrating the washer. The mounting screw hole may comprise an elongate portion extending parallel to the abutment plane. Such a hole eliminates an additional source of error, since the suspension washer can be adjusted along the abutment plane, wherein the suspension washer is guided along the abutment plane by the engagement between the screw body and the elongate portion of the mounting screw hole. The hole may have several elongate portions, arranged e.g. in the shape of a Y. Alternatively, the entire hole may be defined by a single, elongate shape. The shortest width across the hole determines the maximum size of the screw, and therefore serves as a guidance to the user for screw selection. According to an embodiment, the mounting screw hole may have a length and a width along the abutment plane, wherein the relation between the length and the width fulfills the requirement of the length being equal to 1.2 to 3 times, more preferably 1.3 to 2.5 times, the width. Preferably, the length is 4-15 mm, and more preferably 5-12 mm, and/or the width is 1.5-10 mm, more preferably 3-8 mm, and even more preferably 3.5-7 mm.

According to an embodiment, the slot engagement edge extends about the entire circumference of the suspension washer. Thereby, the suspension washer can be freely rotated about e.g. a mounting screw with a maintained ability to engage with the suspension slot. If the circumferential slot engagement edge extends along a circular path, the same level of engagement may be obtained regardless of how the suspension washer has been rotated about the screw body.

According to an embodiment, the elongate portion is defined by two substantially parallel, opposing edges. Such a shape of the elongate portion defines a screw guide having a constant width along its length, thereby warranting a uniform engagement with e.g. a screw head at all locations along its length.

According to an embodiment, the mounting screw aperture is configured as a mounting screw hole penetrating the washer, said mounting screw hole being eccentric relative to a geometric centre of an orthogonal projection of the washer on the abutment plane. The eccentric screw hole may have a circular shape, dimensioned to perfectly fit the screw body, while still allowing adjusting the centre of the suspension washer along a circle determined by the distance between the centre of the hole and the centre of the suspension washer. Such a suspension washer is useful if the item to be hung needs to be aligned in only one, e.g. vertical or horizontal, direction, while the exact alignment in the direction perpendicular to said one direction is less important. Alternatively, the hole may be elongate, allowing the screw to be translated along the length of the screw hole. A suspension washer with an elongate screw hole extending mainly in one direction from the centre of the suspension washer is mechanically stronger than a suspension washer having an elongate screw hole extending, e.g. symmetrically, in two directions from the centre of the suspension washer.

According to an embodiment, the slotted suspension fitting comprises an abutment face configured to, when engaged with said suspension washer, abut, along said abutment plane, said one of the wall and the item to be hung. Such a configuration provides for a rigid and reliable suspension. As an exemplary alternative, the slotted suspension fitting may be countersunk into said other of the wall and the item to be hung to such a depth so as not to abut said one of the wall and the item to be hung.

According to an embodiment, the slotted suspension fitting comprises a wedge extending along the washer engagement portion of the suspension slot and being configured to engage with the slot engagement edge of the suspension washer, the wedge being configured to engage with the slot engagement edge of the suspension washer and thereby draw, as the slot engagement edge of the suspension washer moves further into the washer engagement portion of the suspension slot, the item to be hung towards the wall. Thereby, when in use, a substantial amount of the load on the suspension washer will be applied in an axial direction normal to the wall abutment plane. This results in a strong and rigid friction engagement between the wall and the item to be hung. Moreover, it may also prevent the suspension washer from, over time, being turned about the screw by the weight of the item to be hung.

According to an embodiment, the wedge is non-resilient in a direction perpendicular to the abutment plane. Such a design increases the axial force that can be applied by the wedge, via the slot engagement edge, onto the screw along the screw axis even further.

According to an embodiment, the slotted suspension fitting comprises an abutment plane face configured to, when engaged with said suspension washer, face said abutment plane and said one of the wall and the item to be hung, wherein the wedge of the slotted suspension fitting has a first end facing the washer insertion portion of the suspension slot, and a second end at the washer engagement portion of the suspension slot, wherein a height of the wedge in an axial direction normal to the abutment plane is such that at the first end of the wedge, its height is shorter than the distance between the slot engagement edge and the abutment plane, and at the second end of the wedge, its height exceeds the distance between the slot engagement edge and the abutment plane. Such a design is particularly suitable for a wall hanger system in which the slotted suspension fitting is configured to abut, when in engagement with the suspension washer, said one of the wall and the item to be hung. The design thereby provides for a permanent axial load on the screw and the suspension washer, and an axially loaded engagement between the slotted suspension fitting and the suspension washer.

According to an embodiment, the slotted suspension fitting and/or the suspension washer are/is made of pressed steel sheet.

According to another aspect of the invention, parts or all of the above mentioned problems are solved, or at least mitigated, by a furniture system comprising a pair of suspension rails configured to be vertically mounted on a wall at a horizontal distance from each other; a storage furniture component, such as a shelf or a cabinet, configured to be attached to the pair of suspension rails at respective storage furniture component attachment locations separated by the horizontal distance; and at least one wall hanger system as described hereinabove configured to mount at least one of the suspension rails to a vertical wall. The wall hanger system facilitates obtaining the correct, horizontal distance between the attachment locations when attaching the suspension rails to the wall. This facilitates assembly of the furniture kit. The kit may comprise such wall hanger systems for one or both vertical rails. Moreover, the kit may comprise one or several such wall hanger systems for each suspension rail. It may be preferred, from an ease of installation perspective, that the slotted suspension fitting be configured to be attached to a vertical rail, e.g. by form-fitting engagement and/or mating screw holes. This leaves the suspension washer to be attached to the wall, e.g. using a single screw, thereby minimizing any damage to the wall. According to an embodiment, slotted suspension fittings may be pre-attached to the suspension rails in order to even further facilitate wall mounting.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1 is a diagrammatic view in perspective of a storage furniture system for wall mounting, as mounted to a wall;
Fig. 2 is a schematic view in perspective of a wall hanger system used for attaching the storage furniture system of Fig. 1 to the wall, the wall hanger system comprising a slotted suspension fitting and a suspension washer;
Fig. 3 is a schematic view in perspective of the slotted suspension fitting of Fig. 2;
Fig. 4a illustrates a horizontal section of the suspension washer of Fig. 2, as seen along the plane IV-IV;
Fig. 4b is a horizontal section, corresponding to the view of Fig. 4a, of a second embodiment of the suspension washer of Fig. 2;
Fig. 5 illustrates a vertical section of the slotted suspension fitting of Fig. 3, as seen along the plane V-V;
Fig. 6a is an elevation view of the suspension washer of Fig. 4a, as seen along an axis A;
Fig. 6b corresponds to the view of fig. 6a, and illustrates the suspension washer in a scenario in which it is attached to the wall.
Figs 7a-b are schematic views in perspective illustrating the installation of the suspension washer of Fig. 4a onto a wall; and
Figs 7c-f are vertical sections, as seen in perspective, illustrating the suspension of the slotted suspension fitting of Fig. 3, as attached to a suspension rail, onto the suspension washer of Fig. 4a, as attached to the wall.

### Detailed description of the exemplary embodiments

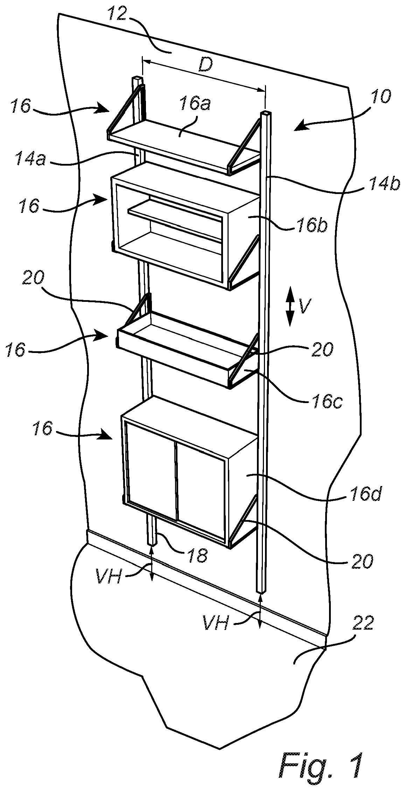

Fig. 1 illustrates a furniture system 10 for mounting on a wall 12. The furniture system 10 comprises a pair of elongate, vertical suspension rails 14a-b configured to be attached to the wall 12 so as to extend in the vertical direction V at a horizontal separation distance D from each other. Storage furniture components 16 are inserted between the suspension rails 14a-b, and have a horizontal width substantially corresponding to the horizontal separation distance D so as to fit between the suspension rails 14a-b. The storage furniture components 16 are releasably attached to the inner edges 18 of the suspension rails 14a-b in a manner not illustrated in detail, e.g. via pins (not illustrated) extending from storage furniture component suspension brackets 20 into sets of holes (not illustrated) provided along the inner edges 18 of the suspension rails 14a-b. According to one embodiment the suspension rails 14a-b are provided with holes in both of its sides 18, so that furniture components 16 can be attached to both sides 18 of the respective rail 14a-b, enabling a combined furniture system 10 with several parallel columns of furniture components 16. In Fig. 1, furniture system 10 has a single column comprising storage furniture components 16 that are exemplified by a single shelf 16a, a multiple-shelf assembly 16b, a tray 16c, and a cabinet 16d.

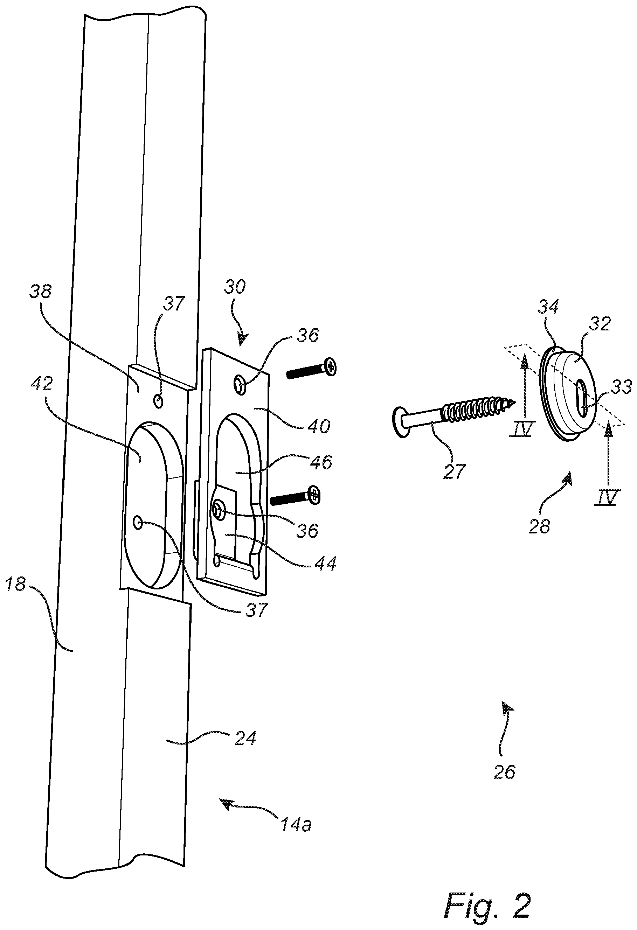

The furniture system 10 is attached to the wall 12 by means of a plurality of wall hanger systems, which will be described with reference to Fig. 2 and onwards. In order to facilitate attaching the storage furniture components 16 to the suspension rails 14a-b, it is highly desirable that the horizontal separation distance D between the suspension rails 14a-b along their entire lengths correspond to a correct, predetermined separation distance determined by the size and shape of the storage furniture components 16. Moreover, it may for aesthetic reasons be desirable that the suspension rails 14a-b be attached to the wall 12 at the same vertical height VH above the floor 22. For the purpose, the wall hanger systems are adjustable, allowing fine-tuning of the position of each suspension rail 14a-b on the wall 12. Such adjustable wall hanger systems may be provided in a kit together with the furniture system 10.

Fig. 2 illustrates a back face 24 of a suspension rail 14a, together with a wall hanger system 26 for attaching an item to be hung, such as the suspension rail 14a, to the vertical wall 12 (Fig. 1). The wall hanger system 26 comprises a suspension washer 28 configured to be attached to the wall 12 (Fig. 1) by means of a mounting screw 27, preferably a flathead screw, and a slotted suspension fitting 30 of keyhole type for cooperation with the suspension washer 28. The suspension washer 28 has a mounting face 32 configured to abut the wall 12, a screw hole 33 for receiving the mounting screw 27, and a slot engagement edge 34 extending along a circular perimeter of the suspension washer 28. The slot engagement edge 34 is configured to engage with the slotted suspension fitting 30 in a manner which will be elucidated hereinbelow.

The slotted suspension fitting 30 is configured to be attached to the back face 24 of the suspension rail 14a. For this purpose, the slotted suspension fitting 30 is provided with a pair of screw holes 36 coinciding with a pair of screw holes 37 in the back face 24 of the suspension rail 14a. Moreover, the suspension rail 14a is provided with a recessed space 38 for receiving the slotted suspension fitting 30 in its entirety, such that the slotted suspension fitting 30, when attached to the suspension rail 14a, will have a wall abutment plane face 40 substantially flush with the back face 24 of the suspension rail 14a. A deeper recessed portion 42 of the space 38 is configured to receive a folded tab 44 of the slotted suspension fitting 30 in a mating manner, so as to provide orientation, guidance and support to the slotted suspension fitting 30 when attaching it to the suspension rail 14a. It will be appreciated that several slotted suspension fittings, similar or identical to the slotted suspension fitting 30 of Fig. 2, may be distributed along the length of the back face 24 of the suspension rail 14a.

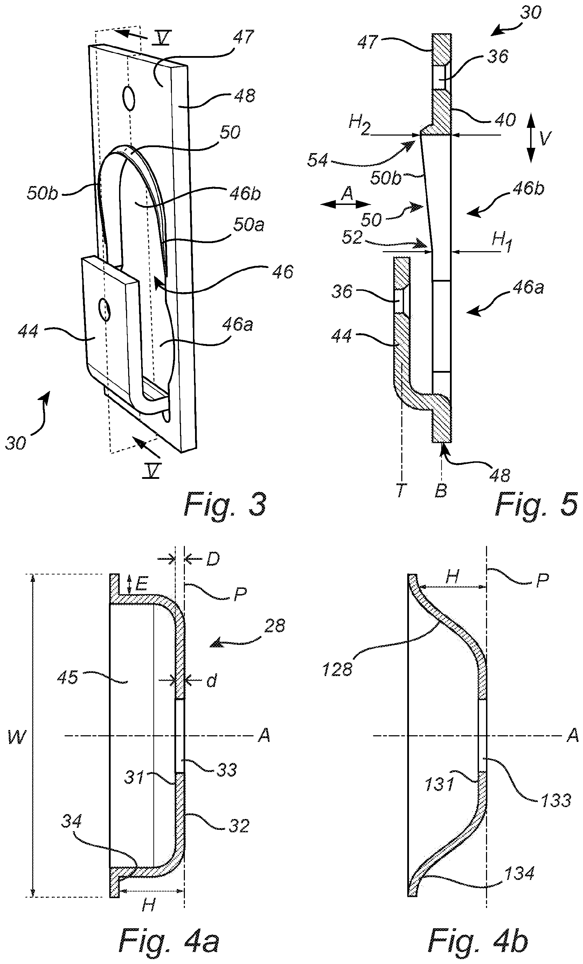

Fig. 3 illustrates the slotted suspension fitting 30 from a different perspective. The slotted suspension fitting 30 comprises a suspension slot 46 for receiving the suspension washer 28 (Fig. 2) in a manner which will be elucidated further below. The suspension slot 46 has a first, relatively wider, washer insertion portion 46a configured to freely receive the slot engagement edge 34 (Fig. 2) of the suspension washer 28, and a second, relatively narrower, washer engagement portion 46b which does not allow the slot engagement edge 34 of the suspension washer 28 to freely pass therethrough.

Fig. 4a illustrates a horizontal section through the geometric centre of the washer 28, as indicated by the section plane IV-IV illustrated in Fig. 2. The mounting face 32 is configured to abut the wall 12 (Fig. 1) along an abutment plane P. The slot engagement edge 34 faces the abutment plane P and the wall 12 (Fig. 1), and is separated from the abutment plane P and the wall 12 by a separation distance H, as measured along an axial direction A normal to the abutment plane P. The separation distance H defines the suspension distance within which the washer engagement portion 46b (Fig. 3) of the slotted suspension fitting (30) will be suspended onto the suspension washer 28. Preferred values of the separation distance H may be between 2 mm and 10 mm, and more preferred between 3 mm and 7 mm. A typical preferred outer width W of the washer 28 may, by way of example, be between 10 mm and 50 mm; more preferred, between 15 mm and 50 mm, and even more preferred, between 20 mm and 35 mm. A typical slot engagement edge 34 may, by way of example, have a width E of between 1 mm and 6 mm, and more preferred, between 2 mm and 4 mm. The suspension washer 28, which may be made of pressed steel in one single piece, also defines a countersunk screw head space 45 in the face opposite to the mounting face 32. Referring back to Fig. 3, the horizontal width of the suspension slot's 46 washer insertion portion 46a exceeds the outer width W of the washer 28, such that the insertion portion 46a may freely receive the slot engagement edge 34 of the suspension washer 28, wherein the same outer width W of the washer 28 exceeds the horizontal width of the suspension slot's 46 washer engagement portion 46b, such that the suspension washer 28 may be locked to the washer engagement portion 46b of the slotted suspension fitting 30, as will be further elaborated hereinafter. The periphery of the mounting screw hole 33 defines a mounting screw engagement edge 31 for engaging with the head of the mounting screw 27 (Fig. 2). A mounting distance D between the mounting screw engagement edge 31 and the abutment plane P defines a minimum distance that can be obtained between the mounting screw head and e.g. a wall onto which the suspension washer 28 has been screwed using the mounting screw 27. In the illustrated example, the mounting distance D corresponds to the thickness d of the sheet material of the suspension washer, even though in other embodiments, d and D may differ.

Fig. 4b illustrates an alternative embodiment of a washer 128, as seen in the same section as that of Fig. 4a. The radially outer portion of the washer 128 has a continuously curved shape, which does not extend parallel to the abutment plane P like the flat slot engagement edge 34 of Fig. 4a. Instead, the slot engagement edge 134 is configured to engage with the slot 46 along a line of contact 134, which is separated from the abutment plane P and the wall 12 by said separation distance H, as measured along said axial direction A normal to the abutment plane P. In addition, the washer 128 may also have a screw hole 133, being of a similar type as the screw hole 33, which will be described in more detail hereinafter.

Fig. 5 illustrates a vertical section through the geometric centre of the slotted suspension fitting 30, as indicated by the section plane V-V illustrated in Fig. 3. The slotted suspension fitting 30 may be made of pressed steel in one single piece. A main body 48 of the slotted suspension fitting 30 extends in a main body plane B, and a first side of the may body 48 defines the abutment plane face 40 (Fig. 2). The folded tab 44 is displaced from the main body plane B. In the illustrated example, the folded tab 44 mainly lies in a folded tab plane T at a distance from a second face 47 of the main body 48, said second face 47 being opposite to said abutment plane face 40. One of the screw holes 36 (Fig. 2) is located in the folded tab 44 and is accessible via the suspension slot 46 (Fig. 2), whereas the other screw hole 36 is located in the main body 48. A wedge structure 50 rises from the second face 47 of the main body 48, and comprises two wedges 50a, 50b (Fig. 3) extending vertically along respective sides of the washer engagement portion 46b of the suspension slot 46. Each wedge 50a-b has a respective first end 52 facing the washer insertion portion 46a of the suspension slot 46, and a respective second end 54 located at the washer engagement portion 46b of the suspension slot 46, wherein the height of the wedge 50a-b in the axial direction A normal to the abutment plane P is such that at the first end 52 of the wedge 50a-b, its height H1, including the steel plate thickness of the main body 48, is shorter than the axial separation distance H between the suspension washer's 28 slot engagement edge 34 and mounting face 32. At the second end 54 of the wedge 50a-b, its height H2, including the steel plate thickness of the main body 48, slightly exceeds said axial separation distance H. For the sake of clarity, it is pointed out that the scale is not consistent between Figs 4a-b and Fig. 5.

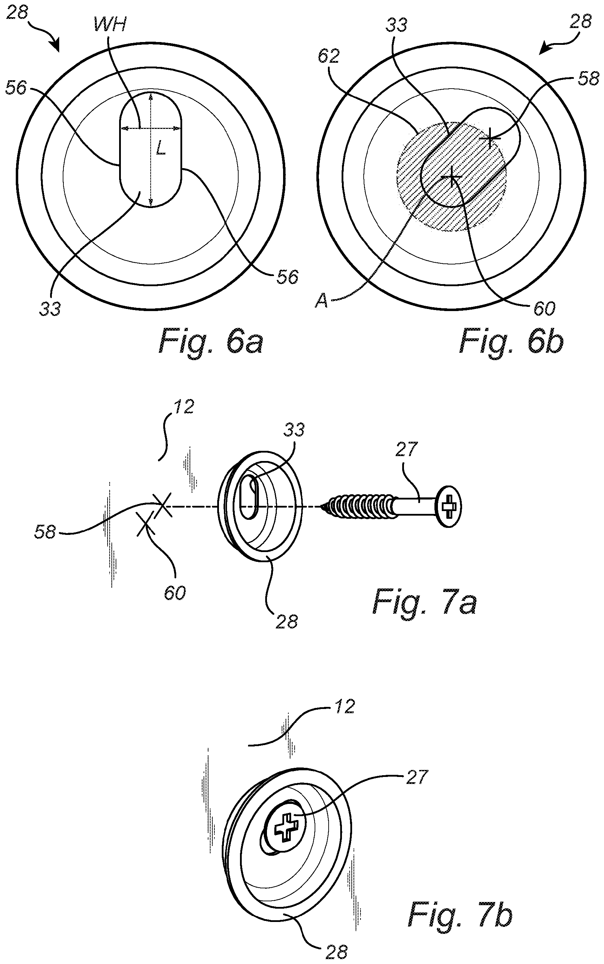

Turning now to Fig. 6a, which illustrates the suspension washer 28 as seen along the axial direction A normal to the abutment plane P (Fig. 4a), the mounting screw hole 33 of the suspension washer 28 is eccentrically located in the washer 28, and has an elongate shape which extends along the abutment plane P. The elongate shape is defined by two parallel, opposing edges 56. Thanks to the elongate shape, the suspension washer 28 can be loosely attached to the wall 12 (Fig. 1) using the mounting screw 27 (Fig. 2), and thereafter, guided by the loose engagement between the mounting screw 27 and the mounting screw hole 33, translated along the abutment plane P (Fig. 4a) to the correct position before the mounting screw 27 (Fig. 2) is fully tightened. This allows adjusting the position of the suspension washer 28 e.g. in the event that any screw hole drilled in the wall 12 is not located at the exactly correct position. The suspension washer 28 can also be freely rotated about the mounting screw 27, such that the displacement can be made in any direction along the abutment plane P. Preferably, the mounting screw hole 33 has a length L of between 4 mm and 15 mm, and more preferred, between 5 mm and 12 mm. Such dimensions provide for a good balance between strength and ability to compensate for e.g. drilling errors. A preferred width WH of the screw hole 33, measured as the distance between the opposing edges 56, may be between 1.5 and 10 mm; more preferred between 3 mm and 8 mm, and even more preferred, between 3.5 mm and 7 mm. Such dimensions suit the most typical screw dimensions used for hanging items on walls. Preferably, the relation between on the one hand the screw hole 33 width WH, which determines the maximum diameter of the mounting screw 27, and on the other hand the screw hole 33 length L, which determines the translation/displacement of the suspension washer 28, and, hence, determines the degree of incorrect screw hole drilling in the wall 12 that can be compensated for, fulfills the requirement of L = 1.2 to 3 times WH, more preferably L = 1.3 to 2.5 times WH.

Fig. 6b illustrates an exemplary situation wherein a screw hole has been drilled in the wall 12, but the centre of this drilled hole is located at an inaccurate position 58 which is offset from a desired, i.e. correct, position 60, e.g. due to accumulated errors when measuring and marking on the wall 12 (Fig. 1). Thanks to the elongate hole 33, the suspension washer 28 can be attached to the wall 12 with the geometric centre A of the washer 28 located at the correct position 60, although the attachment screw 27 (Fig. 2) is screwed into the screw hole at the incorrect position 58.

In other words, by turning the suspension washer 28 about its axis A (Fig. 4a), the elongate hole 33 permits drilling the screw hole with its centre at any inaccurate position within the hatched circle 62, with a maintained possibility of locating the centre A of the suspension washer 28 at the correct position 60.

Figs. 7a-f illustrate more specifically the steps of how the wall hanger system 26 (Fig. 2) may be used for attaching the suspension rail 14a to the wall 12. It is thereby assumed that the slotted suspension bracket 30 is pre-mounted to the suspension rail 14a.

With reference to Fig. 7a, a mounting screw hole is first drilled in the wall 12 at a position 58, which may or may not correspond the exact, desired position 60 (Fig. 6b). Then, the mounting screw 27 is loosely screwed into the mounting screw hole 33. As an alternative to drilling, a self-drilling screw or any other suitable attachment means, such as, although less preferred, a nail, may be used, mutatis mutandis. The suspension washer 28 is thereafter, if needed, adjusted, by displacing the elongate screw hole 33 along the screw 27, to be centered at the correct position 60, and the screw 27 is firmly tightened into the wall 12 so as to firmly lock the suspension washer 28 to the wall 12 as is illustrated in Fig. 7b. Any suitable number of additional suspension washers (not illustrated) may be attached to the wall along a vertical line so as to coincide with any additional number of slotted suspension fittings along the back face 24 of the suspension rail 14a (Fig. 2).

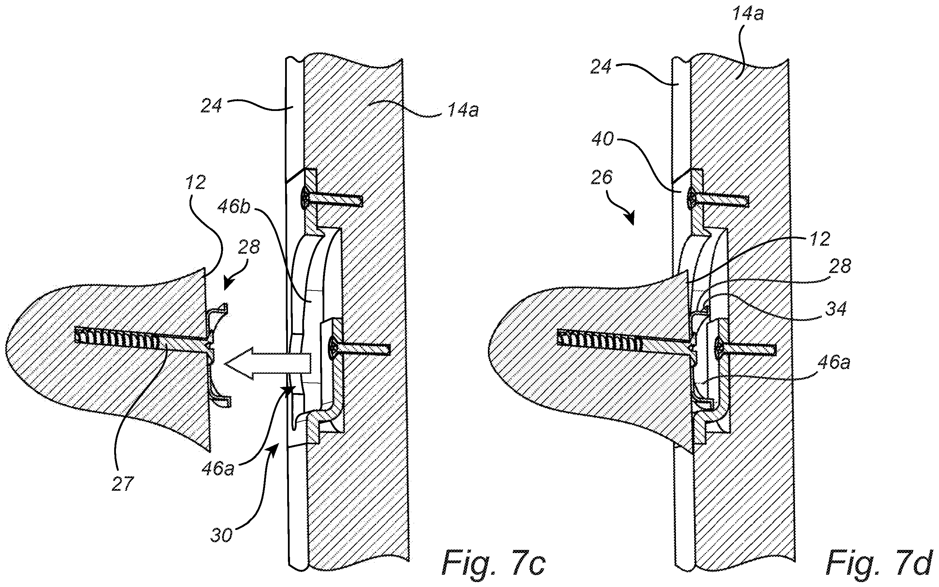

In the mounting step illustrated in Fig. 7c, the suspension rail 14a is aligned with the suspension washer 28 in such a manner that the washer introduction portion 46a of the slotted suspension fitting's 30 suspension slot 46 is brought into alignment with the suspension washer 28, and such that any additional slotted suspension fittings of the suspension rail 14a are aligned with any additional suspension washers. The suspension rail 14a is thereafter placed with its back 24 against the wall 12 such that the slot engagement edge 34 of the suspension washer 28 enters the suspension slot 46 (Fig. 2) via the washer introduction portion 46a, bringing the system 26 to the position of Fig. 7d. In this position, also the abutment face 40 of the slotted suspension fitting 30 rests against the wall 12.

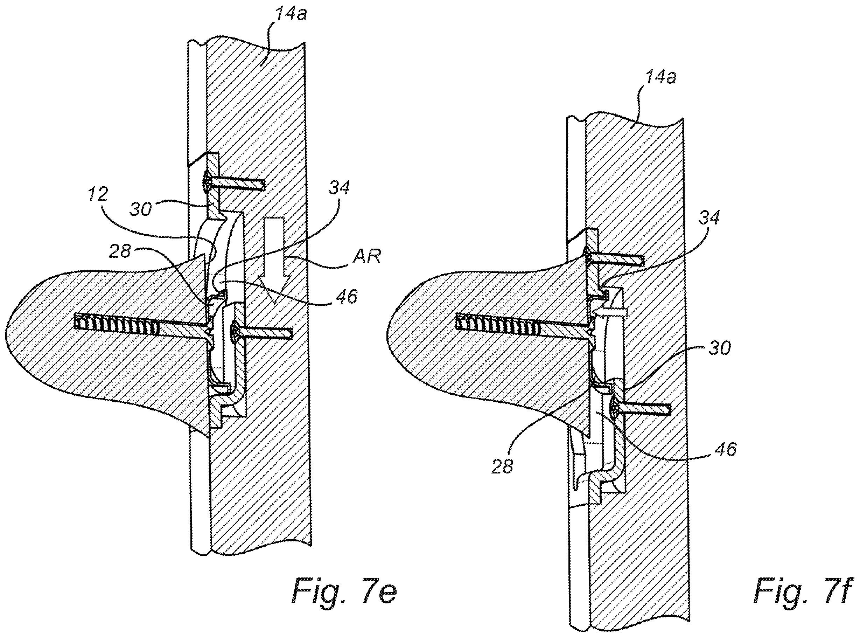

The suspension rail 14a is translated downwards in relation to the wall 12, in the manner illustrated by an arrow AR in Fig. 7e, to the position of Fig. 7f. In doing so, the suspension slot 46 (Fig. 2) of the slotted suspension fitting 30 moves along the slot engagement edge 34 (Fig. 2) of the suspension washer 28 until the slot engagement edge 34 has been confined within the washer engagement portion 46b of the suspension slot 46 by the edges of the suspension slot's 46 washer engagement portion 46b (Fig. 5). During this vertical translation, the wedge structure 50 increasingly engages with the slot engagement edge 34 of the suspension washer 28, thereby increasingly drawing the suspension rail 14a against the wall 12.

Having reached the position illustrated in Fig. 7f, the height H2 of the second end 54 of the wedge 50a-b exceeds the free distance H (Fig. 4a) between the slot engagement edge 34 of the washer 28 and the wall 12. Thereby, the suspension rail 14a is rigidly locked to the wall 12 (Fig. 1) by the friction between them, which is created by the axial load exerted by the wedge structure 50 (Fig. 3) onto the slot engagement edge 34 of the washer 28.

The invention has mainly been described above with reference to a few embodiments. However, as is readily appreciated by a person skilled in the art, other embodiments than the ones disclosed above are equally possible within the scope of the invention, as defined by the appended patent claims. For example, the washer 28 need not be circular; it may have another shape, although a circular shape of the washer 28 is preferred for obtaining, in combination with the elongate screw hole 33, the optimum adjustment possibilities with regard to an inaccurate position 58 of a drilled hole. Moreover, the washer 28 need not be attached to the wall 12. As an alternative, the washer 28 may be attached to the suspension rail 14a-b, and the slotted suspension fitting 30 may be attached to the wall 12. Clearly, the wall hanger system 26 may be used also for hanging other items than a suspension rail on a wall. However, the flexibility of the wall hanger system 26 may become particularly useful where an item to be hung is provided with several attachment locations, such as the two parallel rails 14a and 14b, and/or two or more attachment locations along each of the rails 14a, 14b, which need to coincide in an accurate manner with mating attachment locations on a wall. The slotted suspension fitting 28 need not have a folded tab 44; instead, the slotted suspension fitting 28 may be flat, and may e.g. be attached to the suspension rail 14a above and/or below the deeper recessed portion 42 of the space 38. In the example illustrated hereinabove, the slotted suspension fitting 28 is a pressed steel sheet component screwed to a suspension rail 14a made of e.g. wood. As an alternative, it may be welded or soldered to a suspension rail 14a formed of e.g. a metal tube or any other elongate metal profile of e.g. pressed steel. Alternatively, one or several slotted suspension fittings 28 may be integrally formed with the suspension rail 14a. Such a suspension rail 14a may be made of e.g. pressed steel sheet, and the slotted suspension fitting(s) may be formed directly in the material of the suspension rail 14a by punching one or several keyhole slots in a back face 24 of the suspension rail 14a. Also the wedge structure 50 may be formed directly in such a sheet metal suspension rail 14a.

## Claims

1. A wall hanger system for attaching an item to be hung to a vertical wall, the wall hanger system (26) comprising
a suspension washer (28) configured to be attached to one of the wall (12) and the item (14a-b) to be hung, the suspension washer (28) comprising a mounting face (32) configured to abut, along an abutment plane (P), said one of the wall (12) and the item (14a-b) to be hung, and a slot engagement edge (34) separated from, and facing, said abutment plane (P); and
a slotted suspension fitting (30) for cooperation with said suspension washer (28), the slotted suspension fitting (30) being configured to be attached to the other of the wall (12) and the item (14a-b) to be hung and comprising a suspension slot (46) having a first, relatively wider, washer insertion portion (46a) configured to freely receive the slot engagement edge (34) of the suspension washer (28), and a second, relatively narrower, washer engagement portion (46b) configured to engage with the slot engagement edge (34) of the suspension washer (28), wherein the wall hanger system (26) is configured to allow inserting the slot engagement edge (34) of the suspension washer (28), when the suspension washer (28) is attached to said one of the wall (12) and the item (14a-b) to be hung, into the washer insertion portion (46a) of the suspension slot (46), and translating the item (14a-b) to be hung such that the slot engagement edge (34) of the suspension washer (28) moves along the suspension slot (46) to the washer engagement portion (46b) of the suspension slot (46), thereby confining the slot engagement edge (34) of the suspension washer (28) in the washer engagement portion (46b) of the suspension slot (46) so as to lock the suspension washer (28) to the slotted suspension fitting (30), wherein the suspension washer (28) comprises a mounting screw aperture (33) for receiving a screw (27) for mounting the suspension washer (28) onto said one of the wall (12) and the item (14a-b) to be hung, wherein the mounting screw aperture (33) is an adjustment aperture shaped to allow, when screwed onto said one of the wall (12) and the item (14a-b) to be hung, adjustment of the suspension washer (28) along the abutment plane (P), **characterised in that** the mounting screw aperture (33) comprises an elongate portion extending parallel to the abutment plane (P).

2. The wall hanger system according to claim 1, wherein the mounting screw aperture (33) comprises a mounting screw engagement edge (31) for engaging with a head of a mounting screw, wherein a suspension distance (H) between the slot engagement edge (34) and the abutment plane (P) defined by the mounting face (32), along a direction (A) perpendicular to the abutment plane (P), is greater than a mounting distance (D) between the mounting screw engagement edge (31) and the abutment plane (P) defined by the mounting face (32), along said direction (A) perpendicular to the abutment plane (P).

3. The wall hanger system according to any of the previous claims, wherein the slot engagement edge (34) faces the abutment plane (P) to define, along a direction (A) perpendicular to the abutment plane (P), a free distance (H) between the slot engagement edge (34) and the abutment plane (P).

4. The wall hanger system according to any of the previous claims, wherein the suspension washer (28) is configured as a bowl of sheet material of thickness (d) 0.2-1.5 mm.

5. The wall hanger system according to any of the preceding claims, wherein the suspension washer (28) defines a countersunk screw head space (45) in a face opposite to said mounting face (32).

6. The wall hanger system according to any of the preceding claims, wherein the mounting screw aperture is configured as a mounting screw hole (33) penetrating the washer (28).

7. The wall hanger system according to claim 6, wherein the mounting screw hole (33) has a length (L) and a width (WH) along the abutment plane (P), wherein the relation between the length (L) and the width (WH) fulfills the requirement of the length (L) being equal to 1.2 to 3 times, more preferably 1.3 to 2.5 times, the width (WH); preferably, the length (L) is 4-15 mm, more preferably 5-12 mm; preferably, the width (WH) is 1.5-10 mm, more preferably 3-8 mm, and even more preferably 3.5-7 mm.

8. The wall hanger system according to any of the preceding claims, wherein the elongate portion is defined by two substantially parallel, opposing edges (56).

9. The wall hanger system according to any of the preceding claims, wherein the mounting screw aperture is configured as a mounting screw hole (33) penetrating the washer (28), said mounting screw hole (33) being eccentric relative to a geometric centre of an orthogonal projection of the washer (28) on the abutment plane (P).

10. The wall hanger system according to any of the previous claims, wherein the slotted suspension fitting (30) comprises an abutment face (40) configured to, when engaged with said suspension washer (28), abut, along said abutment plane (P), said one of the wall (12) and the item (14a-b) to be hung.

11. The wall hanger system according to any of the previous claims, wherein the slotted suspension fitting (30) comprises a wedge (50) extending along the washer engagement portion (46b) of the suspension slot (46) and being configured to engage with the slot engagement edge (34) of the suspension washer (28), the wedge (50) being configured to engage with the slot engagement edge (34) of the suspension washer (28) and thereby draw, as the slot engagement edge (34) of the suspension washer (28) moves further into the washer engagement portion (46b) of the suspension slot (46), the item (14a-b) to be hung towards the wall (12).

12. The wall hanger system according to claim 11, wherein the wedge (50) is non-resilient in a direction (A) perpendicular to the abutment plane (P).

13. The wall hanger system according to any of the claims 11-12, wherein the slotted suspension fitting (30) comprises an abutment plane face (40) configured to, when engaged with said suspension washer (28), face said abutment plane (P) and said one of the wall (12) and the item (14a-b) to be hung, wherein the wedge (50) of the slotted suspension fitting (30) has a first end (52) facing the washer insertion portion (46a) of the suspension slot (46), and a second end (54) at the washer engagement portion (46b) of the suspension slot (46), wherein a height of the wedge (50) in an axial direction (A) normal to the abutment plane (P) is such that at the first end (52) of the wedge (50), its height (H1) is shorter than the distance (H) between the slot engagement edge (34) and the abutment plane (P), and at the second end (54) of the wedge (50), its height (H2) exceeds the distance (H) between the slot engagement edge (34) and the abutment plane (P).

14. The wall hanger system according to any of the previous claims, wherein the slotted suspension fitting (30) and/or the suspension washer (28) are/is made of pressed sheet metal, such as steel sheet.

15. A furniture system comprising
a pair of suspension rails (14a, 14b) configured to be vertically mounted on a wall (12) at a horizontal distance (D) from each other;
a storage furniture component (16), such as a shelf (16a) or a cabinet (16d), configured to be attached to the pair of suspension rails (14a, 14b) at respective storage furniture component attachment locations separated by the horizontal distance (D); and
at least one wall hanger system (26) according to any of the previous claims configured to mount at least one of the suspension rails (14a) to a vertical wall (12).

## Patentansprüche

1. Wandaufhängesystem zum Befestigen eines aufzuhängenden Gegenstandes an einer vertikalen Wand, wobei das Wandaufhängesystem (26) umfasst
eine Aufhängescheibe (28), die so konfiguriert ist, dass sie entweder an der Wand (12) oder an dem aufzuhängenden Gegenstand (14a-b) zu befestigen ist, wobei die Aufhängescheibe (28) eine Befestigungsfläche (32) aufweist, die so gestaltet ist, dass sie entlang einer Anschlagebene (P) an der Wand (12) oder an dem aufzuhängenden Gegenstand (14a-b) anliegt, und eine Schlitzeingriffskante (34), die getrennt von der Anschlagebene (P) und dieser zugewandt ist; und
einen geschlitzten Aufhängebeschlag (30) zum Zusammenwirken mit der Aufhängescheibe (28), wobei der geschlitzte Aufhängebeschlag (30) so konfiguriert ist, dass er an dem jeweils anderen Teil der Wand (12) und des aufzuhängenden Gegenstands (14a-b) zu befestigen ist und einen Aufhängeschlitz (46) aufweist, mit einem ersten, relativ breiteren Scheibeneinführungsabschnitt (46a), der so konfiguriert ist, dass er frei den Schlitzeingriffsrand (34) der Aufhängescheibe (28) aufnehmen kann, und mit einem zweiten, relativ schmaleren Scheibeneingriffsabschnitt (46b), der so konfiguriert ist, dass er mit der Schlitzeingriffskante (34) der Aufhängescheibe (28) in Eingriff zu bringen ist, wobei das Wandaufhängesystem (26) so konfiguriert ist, dass es das Einführen der Schlitzeingriffskante (34) der Aufhängescheibe (28) ermöglicht, wenn die Aufhängescheibe (28) an dem einen Teil der Wand (12) oder dem aufzuhängenden Gegenstand (14a-b) angebracht ist, und der aufzuhängende Gegenstand (14a-b) so verschoben wird, dass die Schlitzeingriffskante (34) der Aufhängescheibe (28) sich entlang des Aufhängeschlitzes (46) zu dem Scheibeneingriffsabschnitt (46b) des Aufhängeschlitzes (46) bewegt, wodurch die Schlitzeingriffskante (34) der Aufhängescheibe (28) in dem Scheibeneingriffsabschnitt (46b) des Aufhängeschlitzes (46) eingeschlossen wird, so dass die Aufhängescheibe (28) mit dem geschlitzten Aufhängebeschlag (30) verriegelt wird, wobei die Aufhängescheibe (28) eine Befestigungsschraubenöffnung (33) zur Aufnahme einer Schraube (27) zum Befestigen der Aufhängescheibe (28) an dem einen Teil der Wand (12) oder des aufzuhängenden Gegenstands (14a-b) aufweist, wobei die Befestigungsschraubenöffnung (33) eine Einstellöffnung, die so geformt ist, dass sie, wenn sie an das eine Teil der Wand (12) oder des aufzuhängenden Gegenstands (14a-b) geschraubt wird, die Einstellung der Aufhängescheibe (28) entlang der Anschlagebene Ebene (p) ermöglicht, **dadurch gekennzeichnet, dass** die Befestigungsschraubenöffnung (33) einen langgestreckten Abschnitt aufweist, der sich parallel zu der Anschlagebene (P) erstreckt.

2. Wandaufhängesystem nach Anspruch 1, wobei die Befestigungsschraubenöffnung (33) eine Befestigungsschrauben-Eingriffskante (31) zum Eingriff mit einem Kopf einer Montageschraube aufweist, wobei ein Aufhängeabstand (H) zwischen der Schlitzeingriffskante (34) und der durch die Montagefläche (32) definierten Anschlagebene (P) entlang einer Richtung (A) senkrecht zu der Anschlagebene (P) größer ist als ein Montageabstand (D) zwischen der Befestigungsschrauben-Eingriffskante (31) und der Anschlagebene (P), die durch die Montagefläche (32) definiert ist, entlang der Richtung (A) senkrecht zu der Anschlagebene (P).

3. Wandaufhängesystem nach einem der vorhergehenden Ansprüche, wobei die Schlitzeingriffskante (34) der Anschlagebene (P) zugewandt ist, um entlang einer Richtung (A) senkrecht zur Anschlagebene (P) einen freien Abstand (H) zwischen der Schlitzeingriffskante (34) und der Anschlagebene (P) zu definieren.

4. Wandaufhängesystem nach einem der vorhergehenden Ansprüche, wobei die Aufhängescheibe (28) als eine Schale aus Blech mit einer Dicke (d) von 0,2 - 1,5 mm ausgebildet ist.

5. Wandaufhängesystem nach einem der vorangehenden Ansprüche, wobei die Aufhängescheibe (28) in einer der Befestigungsfläche (32) gegenüberliegenden Fläche einen Raum (45) für einen versenkten Schraubenkopf definiert.

6. Wandaufhängesystem nach einem der vorhergehenden Ansprüche, wobei die Befestigungsschraubenöffnung als ein die Scheibe (28) durchdringendes Befestigungsschraubenloch (33) ausgebildet ist.

7. Wandaufhängesystem nach Anspruch 6, wobei die Befestigungsschraubenöffnung Loch (33) eine Länge (L) und eine Breite (WH) entlang der Anschlagebene (P) aufweist, wobei das Verhältnis zwischen der Länge (L) und der Breite (WH) die Anforderung erfüllt, dass die Länge (L) das 1,2- bis 3-fache, vorzugsweise das 1,3- bis 2,5-fache, der Breite (WH) beträgt; vorzugsweise beträgt die Länge (L) 4-15 mm, mehr bevorzugt 5-12 mm; vorzugsweise beträgt die Breite (WH) 1,5-10 mm, weiter vorzugsweise 3-8 mm, und noch bevorzugter 3,5-7 mm.

8. Wandaufhängesystem nach einem der vorhergehenden Ansprüche, wobei der längliche Abschnitt durch zwei im wesentlichen parallele, gegenüberliegende Kanten (56) definiert ist.

9. Wandaufhängesystem nach einem der vorangehenden Ansprüche, wobei die Montageschraubenöffnung als ein Montageschraubenloch (33) ausgebildet ist, das die Scheibe (28) durchdringt, wobei das Montageschraubenloch (33) relativ zu einem geometrischen Mittelpunkt einer orthogonalen Projektion der Scheibe (28) auf die Anschlagebene (P) exzentrisch ist.

10. Wandaufhängesystem nach einem der vorhergehenden Ansprüche, wobei der geschlitzte Aufhängebeschlag (30) eine Anschlagfläche (40) aufweist, die so konfiguriert ist, dass sie, wenn sie mit der Aufhängescheibe (28) in Eingriff steht, entlang der Anschlagebene (P) an einem Teil der Wand (12) oder dess aufzuhängenden Gegenstands (14a-b) anschlägt.

11. Wandaufhängesystem nach einem der vorhergehenden Ansprüche, wobei der geschlitzte Aufhängebeschlag (30) einen Keil (50) aufweist, der sich entlang des Scheibeneingriffsabschnitts (46b) des Aufhängeschlitzes (46) erstreckt und so gestaltet ist, dass er mit der Schlitzeingriffskante (34) der Aufhängescheibe (28) in Eingriff kommt, wobei der Keil (50) so konfiguriert ist, dass er mit der Schlitzeingriffskante (34) der Aufhängescheibe (28) in Eingriff zu bringen ist und dadurch, wenn sich die Schlitzeingriffskante (34) der Aufhängescheibe (28) weiter in den Scheibeneingriffsabschnitt (46b) des Aufhängeschlitzes (46) bewegt, den aufzuhängenden Gegenstand (14a-b) zur Wand (12) zieht.

12. Wandaufhängesystem nach Anspruch 11, wobei der Keil (50) in einer Richtung (A) senkrecht zur Anschlagebene (P) nicht elastisch ist.

13. Wandaufhängesystem nach einem der Ansprüche 11 bis 12, wobei der geschlitzte Aufhängebeschlag (30) eine Fläche (40) in der Anschlagebene aufweist, die so konfiguriert ist, dass sie, wenn sie mit der Aufhängescheibe (28) in Eingriff steht, der Anschlagebene (P) und einem Teil der Wand (12) oder des aufzuhängenden Gegenstands (14a-b) zugewandt ist, wobei der Keil (50) des geschlitzten Aufhängebeschlags (30) ein erstes Ende (52) hat, das dem Scheibeneinführungsabschnitt (46a) des Aufhängeschlitzes (46) zugewandt ist, und ein zweites Ende (54) an dem Scheibeneingriffsabschnitt (46b) des Aufhängeschlitzes (46), wobei eine Höhe des Keils (50) in einer axialen Richtung (A) senkrecht zu der Anschlagebene (P) derart ist, dass an dem ersten Ende (52) des Keils (50) seine Höhe (H1) kürzer ist als der Abstand (H) zwischen der Schlitzeingriffskante (34) und der Anschlagebene (P), und an dem zweiten Ende (54) des Keils (50) seine Höhe (H2) größer ist als der Abstand (H) zwischen der Schlitzeingriffskante (34) und der Anschlagebene (P).

14. Wandaufhängesystem nach einem der vorhergehenden Ansprüche, wobei der geschlitzte Aufhängebeschlag (30) und/oder die Aufhängescheibe (28) aus gepresstem Blech, wie z.B. Stahlblech, bestehen.

15. Möbelsystem mit
einem Paar von Aufhängeschienen (14a, 14b), die so konfiguriert sind, dass sie vertikal an einer Wand (12) in einem horizontalen Abstand (D) zueinander zu montieren sind; eine Aufbewahrungsmöbelkomponente (16), wie ein Regal (16a) oder ein Schrank (16d), die konfiguriert ist, um an dem Paar von Aufhängeschienen (14a, 14b) an entsprechenden Anbringungsorten der Aufbewahrungsmöbelkomponenten befestigt zu werden, die durch den horizontalen Abstand Abstand (D) getrennt sind; und
mindestens ein Wandaufhängesystem (26) nach einem der vorhergehenden Ansprüche, das so konfiguriert ist, dass es mindestens eine der Aufhängeschienen (14a) an einer vertikalen Wand (12) befestigt.

## Revendications

1. Système de suspension murale destiné à fixer un article à suspendre à un mur vertical, le système de suspension murale (26) comprenant
une rondelle de suspension (28) conçue pour être fixée à l'un du mur (12) et de l'article (14a-b) à suspendre, la rondelle de suspension (28) comprenant une face de montage (32) conçue pour venir en butée, le long d'un plan de butée (P), contre ledit un du mur (12) et de l'article (14a-b) à suspendre, et un bord de coopération avec une fente (34) séparé dudit plan de butée (P) et lui faisant face ; et
un accessoire de suspension à fente (30) destiné à coopérer avec ladite rondelle de suspension (28), l'accessoire de suspension à fente (30) étant conçu pour être fixé à l'autre du mur (12) et de l'article (14a-b) à suspendre et comprenant une fente de suspension (46) comportant une première partie d'introduction de rondelle, relativement plus large, (46a) conçue pour recevoir librement le bord de coopération avec une fente (34) de la rondelle de suspension (28), et une seconde partie de coopération de rondelle, relativement plus étroite, (46b) conçue pour coopérer avec le bord de coopération avec une fente (34) de la rondelle de suspension (28), dans lequel le système de suspension murale (26) est conçu pour permettre une introduction du bord de coopération avec une fente (34) de la rondelle de suspension (28), lorsque la rondelle de suspension (28) est fixée audit un du mur (12) et de l'article (14a-b) à suspendre, dans la partie d'introduction de rondelle (46a) de la fente de suspension (46), et une translation de l'article (14a-b) à suspendre de sorte que le bord de coopération avec une fente (34) de la rondelle de suspension (28) soit déplacé le long de la fente de suspension (46) jusqu'à la partie de coopération de rondelle (46b) de la fente de suspension (46), confinant ainsi le bord de coopération avec une fente (34) de la rondelle de suspension (28) dans la partie de coopération de rondelle (46b) de la fente de suspension (46) de façon à verrouiller la rondelle de suspension (28) par rapport à l'accessoire de suspension à fente (30), dans lequel la rondelle de suspension (28) comprend une ouverture de vis de montage (33) destinée à recevoir une vis (27) à des fins de montage de la rondelle de suspension (28) sur ledit un du mur (12) et de l'article (14a-b) à suspendre, dans lequel l'ouverture de vis de montage (33) est une ouverture de réglage façonnée pour permettre, lors du vissage sur ledit un du mur (12) et de l'article (14a-b) à suspendre, un réglage de la rondelle de suspension (28) le long du plan de butée (P),
**caractérisé en ce que**
l'ouverture de vis de montage (33) comprend une partie allongée s'étendant parallèlement au plan de butée (P).

2. Système de suspension murale selon la revendication 1, dans lequel l'ouverture de vis de montage (33) comprend un bord de coopération avec une vis de montage (31) destiné à coopérer avec une tête de vis de montage, dans lequel une distance de suspension (H) entre le bord de coopération avec une fente (34) et le plan de butée (P) défini par la face de montage (32), dans une direction (A) perpendiculaire au plan de butée (P), est supérieure à une distance de montage (D) entre le bord de coopération avec une vis de montage (31) et le plan de butée (P) défini par la face de montage (32), dans ladite direction (A) perpendiculaire au plan de butée (P).

3. Système de suspension murale selon l'une quelconque des revendications précédentes, dans lequel le bord de coopération avec une fente (34) fait face au plan de butée (P) pour définir, dans une direction (A) perpendiculaire au plan de butée (P), une distance libre (H) entre le bord de coopération avec une fente (34) et le plan de butée (P).

4. Système de suspension murale selon l'une quelconque des revendications précédentes, dans lequel la rondelle de suspension (28) est conçue sous forme de cuvette de matériau en feuille ayant une épaisseur (d) comprise entre 0,2 et 1,5 mm.

5. Système de suspension murale selon l'une quelconque des revendications précédentes, dans lequel la rondelle de suspension (28) définit un espace de tête de vis fraisée conique (45) dans une face opposée à ladite face de montage (32).

6. Système de suspension murale selon l'une quelconque des revendications précédentes, dans lequel l'ouverture de vis de montage est conçue sous forme de trou de vis de montage (33) pénétrant la rondelle (28).

7. Système de suspension murale selon la revendication 6, dans lequel le trou de vis de montage (33) a une longueur (L) et une largeur (WH) le long du plan de butée (P), dans lequel la relation entre la longueur (L) et la largeur (WH) satisfait l'exigence telle que la longueur (L) est égale à 1,2 à 3 fois, de préférence 1,3 à 2,5 fois, la largeur (WH) ; de préférence, la longueur (L) est de 4 à 15 mm, on préfère le plus de 5 à 12 mm ; idéalement, la largeur (WH) est de 1,5 à 10 mm, plus idéalement de 3 à 8 mm, et encore plus idéalement de 3,5 à 7 mm.

8. Système de suspension murale selon l'une quelconque des revendications précédentes, dans lequel la partie allongée est définie par deux bords opposés sensiblement parallèles (56).

9. Système de suspension murale selon l'une quelconque des revendications précédentes, dans lequel l'ouverture de vis de montage est conçue sous forme de trou de vis de montage (33) pénétrant la rondelle (28), ledit trou de vis de montage (33) étant excentré par rapport à un centre géométrique d'une projection orthogonale de la rondelle (28) sur le plan de butée (P).

10. Système de suspension murale selon l'une quelconque des revendications précédentes, dans lequel l'accessoire de suspension à fente (30) comprend une face de butée (40) conçue, lorsqu'elle coopère avec ladite rondelle de suspension (28), pour venir en butée le long dudit plan de butée (P), avec ledit un du mur ou de l'article (14a-b) à suspendre.

11. Système de suspension murale selon l'une quelconque des revendications précédentes, dans lequel l'accessoire de suspension à fente (30) comprend un coin (50) s'étendant le long de la partie de coopération avec une rondelle (46b) de la fente de suspension (46) et étant conçu pour coopérer avec le bord de coopération avec une fente (34) de la rondelle de suspension (28), le coin (50) étant conçu pour coopérer avec le bord de coopération avec une fente (34) de la rondelle de suspension (28) et pour ainsi tirer, à mesure que le bord de coopération avec une fente (34) de la rondelle de suspension (28) est déplacé plus avant dans la partie de coopération avec une rondelle (46b) de la fente de suspension (46), l'article (14a-b) à suspendre en direction du mur (12).

12. Système de suspension murale selon la revendication 11, dans lequel le coin (50) n'est pas élastique dans une direction (A) perpendiculaire au plan de butée (P).

13. Système de suspension murale selon l'une ou l'autre des revendications 11 et 12, dans lequel l'accessoire de suspension à fente (30) comprend une face plane de butée (40) conçue pour, lorsqu'elle coopère avec ladite rondelle de suspension (28), faire face audit plan de butée (P) et audit un du mur (12) et de l'article (14a-b) à suspendre, dans lequel le coin (50) de l'accessoire de suspension à fente (30) comporte une première extrémité (52) faisant face à la partie d'introduction de rondelle (46a) de la fente de suspension (46), et une seconde extrémité (54) au niveau de la partie de coopération avec une rondelle (46b) de la fente de suspension (46), dans lequel une hauteur du coin (50) dans une direction axiale (A) normale au plan de butée (P) est telle que, au niveau de la première extrémité (52) du coin (50), sa hauteur (H1) est plus courte que la distance (H) entre le bord de coopération avec une fente (34) et le plan de butée (P), et que, au niveau de la seconde extrémité (54) du coin (50), sa hauteur (H2) dépasse la distance (H) entre le bord de coopération avec une fente (34) et le plan de butée (P).

14. Système de suspension murale selon l'une quelconque des revendications précédentes, dans lequel l'accessoire de suspension à fente (30) et/ou la rondelle de suspension (28) sont fabriqués à partir de tôle embossée, telle que de tôle d'acier.

15. Système de meuble, comprenant
deux rails de suspension (14a, 14b) conçus pour être montés verticalement sur un mur (12) à une distance horizontale (D) l'un de l'autre ;
un composant de meuble de rangement (16), tel qu'une étagère (16a) ou une armoire (16d), conçu pour être fixé aux deux rails de suspension (14a, 14b) à des emplacements de fixation de composant de meuble de rangement respectifs séparés de la distance horizontale (D) ; et
au moins un système de suspension murale (26) selon l'une quelconque des revendications précédentes conçu pour monter au moins l'un des rails de suspension (14a) sur un mur vertical (12).
